# EUROPÄISCHE PATENTANMELDUNG

(11) **EP 0 521 391 A2**
(43) Veröffentlichungstag der Anmeldung: **07.01.1993**
(21) Anmeldenummer: 92110716.5
(22) Anmeldetag: 25.06.1992
(51) Int. Cl.: H01R 13/645, G05B 1/03, H05K 7/14

(54) **Sollwertgeber zur Vorwahl binärer Werte und Grössen**

(30) Priorität: 02.07.1991 DE 9108096 U; 02.07.1991 DE 9108098 U
(71) Anmelder: Skupin, Johann, D-53840 Troisdorf (DE); Rast, Oliver, D-53121 Bonn (DE)
(72) Erfinder: Skupin, Johann, D-53840 Troisdorf (DE); Rast, Oliver, D-53121 Bonn (DE)

(57) **Zusammenfassung**

Die Erfindung beschreibt einen Sollwertgeber zur Vorwahl binärer Werte und Größen für Soll-Istwert Vergleiche in Mess- und/oder Regeleinrichtungen oder elektronischen Automatisierungssteuerungen. Der Sollwertgeber (1) besteht dabei aus einem Codewürfel (2) und einem mit dem Codewürfel (2) zusammenfügbaren Sockelelement (3). Auf allen oder einzelnen Seiten des Codewürfels befinden sich Codiervorgabeelemente (4, 4'), die eine optische oder mechanische Funktionsvorgabe aufweisen. Die Codiervorgabeelemente (4, 4') wirken beim Zusammenfügen des Codierwürfels (2) mit dem Sockelelement (3) auf die in dem Sockelelement (3) angeordneten Reflektionselemente (7) oder auf die Kontaktfedern (7'). Wesentlich ist die vielfache Codevorgabevariation, die durch die Möglichkeit der dreidimensionalen Anwendung des Codewürfels (2) erreicht wird.

## Beschreibung

Sollwertgeber zur Vorwahl binärer Werte oder Größen für Soll-Istwert vergleiche in Mess- und/oder Regeleinrichtungen oder elektronischen Automatisierungssteuerungen.

Sollwertgeber der eingangs genannten Art sind nach dem Stand der Technik als mechanische Codierschalter bekannt, die mittels einstellbarer Ziffern 0-9 den entsprechenden BCD-Code liefern. Die Codierschalter bestehen aus einem Gehäuse mit einem Wahlrad, um das die Zifferrn 0 bis 9 gedruckt oder geprägt sind. Das Prinzip dieser Codierschalter beruht auf verschiedene Methoden, um mehrere geöffnete oder geschlossene Kontaktzustände zu erreichen. Bei einer Methode befindet sich auf dem Wahlrad eine gedruckte Schaltung, die über feststehende Kontakte schleift. Umgekehrt ist die Funktion anderer Codierschalter, bei denen das Wahlrad eine oder mehrere Kontaktfedern trägt, die über eine gedruckte Schaltung schleifen. Bei einem Drucktasten-Vorwahlschalter wird die Wahlscheibe durch einen mechanischen Antrieb betätigt. Die Bauweise dieser Codier- und Vorwahlschalter ist relativ kompliziert und aufwendig. Der Abgriff ist dabei nur über elektrische Verbindungsleitungen möglich. Optische Codiereinrichtungen oder Sollwertgeber sind im wesentlichen als Strichcodeleser bekannt.

Der Erfindung liegt daher die Aufgabe zugrunde, einen Sollwertgeber zu Vorwahl binärer Werte oder Größen zu schaffen, der sowohl optische als auch elektromechanische Sollwertvorgabestellen und Sollwertabfragestellen aufweist, der eine einfache Handhabung und kostengünstige Ausführung aufweist, der mit kompakter Bauweise eine wesentliche Platzersparnis darstellt und eine deutliche und sichere Visualisierung einer aktuellen Sollwertvorgabe wiedergibt.

Diese Aufgabe wird erfindungsgemäß durch die im Anspruch 1 gekennzeichneten Merkmale gelöst. Die Unteransprüche 2 bis 7 kennzeichnen weiterführende Ausbildungen der Erfindung.

Dabei ist es von besonderem Vorteil, daß der Sollwertgeber aus einem Codewürfel und einem mit dem Codewürfel zusammenfügbarem Sockelelement besteht, daß auf allen oder einzelnen Flächen des Codewürfels eine oder mehrere Codiervorgabeelemente angeordnet sind, daß die Codiervorgabeelemente optische Codiervorgabeelemente oder mechanische Codiervorgabeelemente sind,
daß im Falle der Anordnung optischer Codiervorgabeelemente das Sockelelement integrierte optische Reflektionselemente aufweist, die an Zweidrahtleitungen angeschlossen sind, wobei der Codewürfel richtungsunabhängig in drei Dimensionen mit jeder seiner Flächen in das Sockelelement einfügbar ist und dabei die Codiervorgabeelemente über die Reflektionselemente zentriert werden und
daß im Falle der Anordnung mechanischer Codiervorgabeelemente das Sockelelement Kontaktfedern aufweist, die mit ihren Kontaktflächen über eine elektrisches Potential führende Kontaktbahn angeordnet sind und im unbetätigten Zustand keine Kontaktierung mit der Kontaktbahn aufweisen und daß der Codewürfel richtungsunabhängig in drei Dimensionen mit jeder seiner Flächen in das Sockelelement einfügbar ist und dabei die mechanischen Codiervorgabeelemente auf die Kontaktierung der Kontaktfedern mit der Kontaktbahn wirken.

Zweckmäßigerweise ist der Codewürfel formschlüssig in das Sockelelement einsteckbar und wird dabei mit seinen Codiervorgabeelementen über die Reflektionselemente oder über die Kontaktfedern zentriert wird und daß die optischen Codiervorgabeelemente aus das Licht reflektierende Codiermarken und aus das Licht nicht reflektierende Codiermarken bestehen und das die Reflektionselemente Lichtschranken sind.
Vorteilhafterweise bestehen die mechanischen Codiervorgabeelemente aus Vertiefungen und zwischen den Vertiefungen liegenden Stegen, wobei im gesteckten Zustand des Codewürfels die Stege des betreffenden Codiervorgabeelementes die Kontaktfedern mit der Kontaktbahn kontaktieren, während die Vertiefungen eine Kontaktierung der Kontaktfedern mit der Kontaktbahn verhindern. Weiterhin ergibt sich aus der Erfindung der Vorteil, daß das Sockelelement Verrastungselemente aufweist, in die entsprechende Verrastungsvorrichtungen des Codewürfels einrasten, wobei die Codiervorgabeelemente des Codewürfels über die Federkontakte oder über die Kontakfedern fixiert werden und daß auf den Flächen des Codewürfels eine kennzeichnende Beschriftung aufgebracht ist, die den aktuellen Sollwert des Sollwertgebers zur Sichtseite hin visualisiert. Schließlich ist es vorteilhaft, daß die Codiervorgabeelemente im Flächenbereich aller Kanten des Codewürfels angeordnet werden.

Im folgenden wird die Erfindung anhand der in der Zeichnung dargestellten Ausführungsbeispiele näher beschrieben.
Es zeigen
**Fig.1** den erfindungsgemäßen Sollwertgeber mit optischen Codierelementen, wobei Codewürfel und Sockelelement in noch nicht zusammengefügten Zustand dargestellt sind.
**Fig.2** den erfindungsgemäßen Sollwertgeber mit elektromechanischen Codierelementen, wobei Codewürfel und Sockelelement in noch nicht zusammengefügten Zustand dargestellt sind.

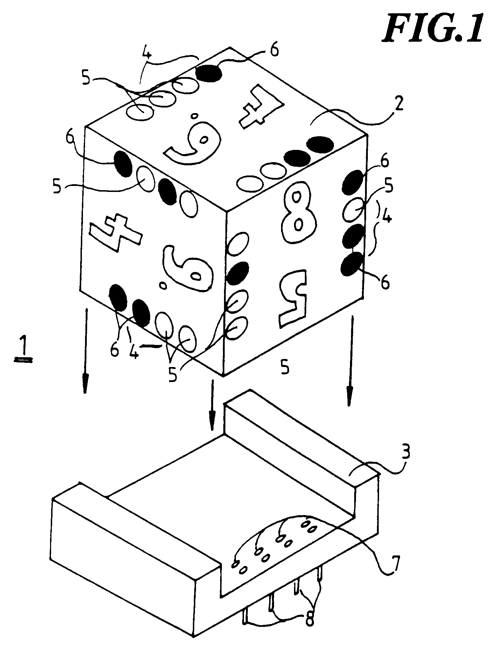

Die Fig.1 zeigt den erfindungsgemäßen Sollwertgeber mit optischen Codierelementen, wobei Codewürfel und Sockelelement in noch nicht zusammengefügten Zustand dargestellt sind. Der Sollwertgeber 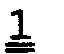 besteht aus dem Codewürfel 2 und dem Sockelelement 3. Im Kantenbereich aller Flächen des Codewürfels befinden sich optische Codierelemente 4, die aus das Licht reflektierende Codiermarken 5 und aus das Licht absorbierende Codiermarken 6 bestehen. In dem Sockelelement 3 sind Reflektionselemente 7 integriert, die vorteilhafterweise als Reflektionslichtschranken ausgeführt sind. Der Codewürfel 2 wird in Pfeilrichtung formschlüssig in das Sockelelement 2 eingeführt, wobei eine in der Zeichnung nicht dargestellte Verclipsung bekannter Machart den Codewürfel arretiert und die Codemarken 5, 6 direkt über die Reflektionslichtschranken 7 zentriert. Das durch die Reflektionselemente 7 erzeugte Licht wird entweder von den Codiermarken 5 reflektiert oder von den Codiermarken 6 absorbiert. Eine Sollwertänderung ist leicht und schnell erreicht, indem der Codewürfel 2 aus dem Sockelelement 3 herausgezogen wird und in vertikaler, horizontaler oder axialer Richtung verdreht und mit dem gewünschten Sollwert in das Sockelelement 3 eingesteckt wird. Eine dem Sollwert kennzeichnende Beschriftung befindet sich auf allen Flächen des Codewürfels 2, wobei der aktuelle Sollwert immer in lesbarer Form auf der Sichtseite des Codewürfels 2 erkennbar ist. Im nicht gesteckten Zustand des Codewürfels 2 ergibt sich immer der Sollwert 0, der auf dem Sockelelement aufgedruckt oder -geprägt ist.

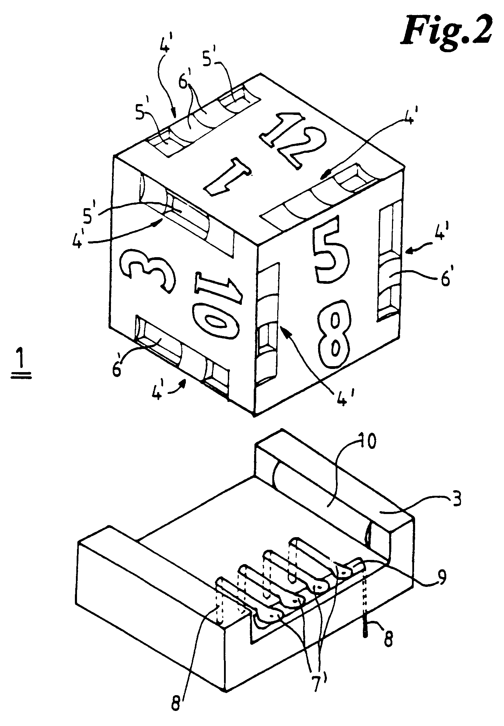

Die Fig. 2 zeigt den erfindungsgemäßen Sollwertgeber mit elektromechanischen Codierelementen, wobei Codewürfel und Sockelelement in noch nicht zusammengefügten Zustand dargestellt sind. Im Kantenbereich aller Flächen des Codewürfels 2 befinden sich mechanische Codierelemente 4', die aus einer Reihe von Vertiefungen 5' und dazwischen befindliche Stege 6' bestehen. In dem Sockelelement 3 befinden sich Kontaktfedern 7', die mit ihrer Kontaktfläche über eine elektrisches Potential führende Kontaktbahn 9 angeordnet sind. Der Codewürfel 2 wird in Pfeilrichtung formschlüssig in das Sockelelement 3 eingeführt, wobei eine Verclipsung den Codewürfel arretiert und das entsprechende Codierelement 4' direkt über die Kontaktfesern 7' zentriert. Wird der Codewürfel 2 in das Sockelelement 3 eingesteckt, verrastet die Clipsfeder 10, in die leicht abgerundeten Senken des Codierelementes 4'. Die Stege 6' des Codierelementes 4', das dabei über den Kontaktfedern 7' liegt, ist dann aktiv un die Stege 6' drücken die Kontaktfedern 7' gegen die Kontaktbahn 9. Die Vertiefungen 5' lassen die Kontaktfedern in ihre Ruhelage, so daß die entsprechenden Kontaktfedern geöffnet bleiben. Je nach unterschiedlicher Anordnung der Vertiefungen 5' und der Stege 6' ergibt sich eine entsprechende Codiervorwahl der dargestellten Kontaktfedern 7'. Eine Sollwertänderung ist leicht und schnell erreicht, indem der Codewürfel 2 aus dem Sockelelement 3 herausgezogen wird und in vertikaler, horizontaler oder axialer Richtung verdreht und mit dem gewünschten Sollwert in das Sockelelement 3 eingesteckt wird. Eine dem Sollwert kennzeichnende Beschriftung befindet sich auf allen Flächen des Codewürfels 2, wobei der aktuelle Sollwert immer in lesbarer Form auf der Sichtseite des Codewürfels 2 erkennbar ist. An den Kontaktfedern 7' und an der Kontaktbahn 9 befinden sich Leitungsanschlußelemente 8 zum Abgriff des codierten BCD-Wertes. Als Sicherheitsvorkehrung ist das Sockelelement derart ausgebildet, daß bei nicht gestecktem Codewürfel 2 ein Wert -vorzugsweise eine Null- vorgeben wird, der für einen sicherheitswirksamen Zustand der Einrichtung sorgt, die den Sollwert verarbeiten soll.

## Patentansprüche

1. Sollwertgeber zur Vorwahl binärer Werte oder Größen für Soll-Istwert Vergleiche in Mess- und/oder Regeleinrichtungen oder elektronischen Automatisierungssteuerungen, **dadurch gekennzeichnet,** daß der Sollwertgeber( 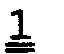 ) aus einem Codewürfel (2) und einem mit dem Codewürfel (2) zusammenfügbarem Sockelelement (3) besteht,
daß auf allen oder einzelnen Flächen des Codewürfels (2) eine oder mehrere Codiervorgabeelemente (4, 4') angeordnet sind,
daß die Codiervorgabeelemente optische Codiervorgabeelemente (4) oder mechanische Codiervorgabeelemente (4') sind,
daß im Falle der Anordnung optischer Codiervorgabeelemente (4) das Sockelelement (3) integrierte optische Reflektionselemente (7) aufweist, die an Zweidrahtleitungen (8) angeschlossen sind, wobei der Codewürfel (2) richtungsunabhängig in drei Dimensionen mit jeder seiner Flächen in das Sockelelement (3) einfügbar ist und dabei die Codiervorgabeelemente (4) über die Reflektionselemente (7) zentriert werden und
daß im Falle der Anordnung mechanischer Codiervorgabeelemente (4') das Sockelelement (3) Kontaktfedern (7') aufweist, die mit ihren Kontaktflächen über eine elektrisches Potential führende Kontaktbahn (9) angeordnet sind und im unbetätigten Zustand keine Kontaktierung mit der Kontaktbahn (9) aufweisen und daß der Codewürfel (2) richtungsunabhängig in drei Dimensionen mit jeder seiner Flächen in das Sockelelement (3) einfügbar ist und dabei die mechanischen Codiervorgabeelemente (4') auf die Kontaktierung der Kontaktfedern (7') mit der Kontaktbahn (9) wirken.

2. Sollwertgeber nach Anspruch 1, **dadurch gekennzeichnet,** daß der Codewürfel (2) formschlüssig in das Sockelelement (3) einsteckbar ist und dabei mit seinen Codiervorgabeelementen (4, 4') über die Reflektionselemente (7) oder über die Kontaktfedern (7') zentriert wird.

3. Sollwertgeber nach den Ansprüchen 1 und 2, **dadurch gekennzeichnet,** daß die optischen Codiervorgabeelemente (4) aus das Licht reflektierende Codiermarken (5) und aus das Licht nicht reflektierende Codiermarken (6) bestehen und das die Reflektionselemente (7) Lichtschranken sind.

4. Sollwertgeber nach Anspruch 1, **dadurch gekennzeichnet,** daß das mechanische Codiervorgabeelement (4') aus Vertiefungen (5') und zwischen den Vertiefungen (5') liegenden Stegen (6') besteht, wobei im gesteckten Zustand des Codewürfels (2) die Stege (6') des betreffenden Codiervorgabeelementes (4') die Kontaktfedern (7') mit der Kontaktbahn (9) kontaktieren, während die Vertiefungen (5') eine Kontaktierung der Kontaktfedern (7') mit der Kontaktbahn (9) verhindern.

5. Sollwertgeber nach den Ansprüchen 1 bis 3, **dadurch gekennzeichnet,** daß das Sockelelement (3) Verrastungselemente (10) aufweist, in die entsprechende Verrastungsvorrichtungen des Codewürfels (2) einrasten, wobei die Codiervorgabeelemente (4, 4') des Codewürfels (2) über die Federkontakte (7) oder über die Kontakfedern (7') fixiert werden.

6. Sollwertgeber nach den Ansprüchen 1 bis 4, **dadurch gekennzeichent,** daß auf den Flächen des Codewürfels (2) eine kennzeichnende Beschriftung aufgebracht ist, die den aktuellen Sollwert des Sollwertgebers ( 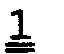 ) zur Sichtseite hin visualisiert.

7. Sollwertgeber nach den Ansprüchen 1 bis 6, **dadurch gekennzeichnet,** daß die Codiervorgabeelemente (4, 4') im Flächenbereich aller Kanten des Codewürfels (2) angeordnet werden.
